# EUROPEAN PATENT APPLICATION

(11) **EP 4 819 376 A1**
(43) Date of publication of application: **07.10.2026**
(21) Application number: 25886299.4
(22) Date of filing: 17.09.2025
(51) Int. Cl.: H01M 50/673, H01M 50/636, H01M 10/6568, H01M 10/625, H01M 50/249, H01M 50/682

(54) **BATTERY PACK**

(30) Priority: 01.11.2024 KR 20240153834; 24.01.2025 KR 20250011868
(71) Applicant: LG Energy Solution, Ltd., Seoul 07335 (KR)
(72) Inventor: PARK, Ju-Hun, Daejeon 34122 (KR); KIM, So-Young, Daejeon 34122 (KR); PARK, Gi-Chan, Daejeon 34122 (KR); JEONG, Dong-Ik, Daejeon 34122 (KR); HWANG, Won-Pill, Daejeon 34122 (KR)
(74) Representative: Plasseraud IP
(86) International application number: PCT/KR2025/014483
(87) International publication number: WO 2026/095346

(57) **Abstract**

Disclosed is a battery pack. The battery pack includes a bottom cover assembly; a battery module installed on an upper surface of the bottom cover assembly; a top cover assembly located above the battery module and having a flow path formed therein and an injection hole communicating with the flow path and facing the battery module; and a hole cover fixed between the top cover assembly and the battery module and configured to seal the injection hole.

## Description

### TECHNICAL FIELD

The present disclosure relates to a battery pack.

The present application claims priority to Korean Patent Application No. 10-2024-0153834 filed on November 1, 2024, and Korean Patent Application No. 10-2025-0011868 filed on January 24, 2025, in the Republic of Korea, the disclosure of which is incorporated herein by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be referred to as a battery cell. In addition, multiple battery modules may be connected to each other to form a battery pack.

However, when a battery pack includes a plurality of battery modules and each battery module includes a plurality of battery cells, it may be vulnerable to a thermal chain reaction between battery modules or between battery cells. For example, when an event such as thermal runaway occurs within a single battery module, the thermal runaway must be suppressed from propagating to other battery modules or other battery cells. If the propagation of thermal runaway between battery modules or battery cells is not properly suppressed, an event occurring in a specific battery module or battery cell may cause a chain thermal reaction in other battery modules or other battery cells, potentially causing an explosion or fire or increasing its scale.

In particular, when an event such as thermal runaway occurs in a single battery module, gas or flame may be randomly discharged to the outside. If the discharge of gas or flame is not properly controlled, the gas or flame may be discharged toward other battery modules, potentially causing a thermal chain reaction in the other battery modules. In particular, a module terminal may be present at the front side of the battery module, and a component such as a module bus bar for electrical connection with other battery modules or battery packs may be present. Therefore, if flame is discharged to the front side of the battery module, the module terminals may be damaged and an electrical short may occur within the battery pack. In addition, since other battery modules may be present at the front side of the battery module, if flame is discharged to the front side of a specific battery module, the discharged flame may be directed to other battery modules, easily causing a fire to spread between battery modules.

If thermal transfer between battery modules or battery cells is not properly controlled, a sudden voltage drop may occur in the battery module or battery pack. This may lead to a sudden shutdown of the device in which the battery module or battery pack is mounted, resulting in unexpected damage. For example, if a voltage drop occurs suddenly in a battery pack while an electric vehicle is in operation, there is no time to move the vehicle to a safe location.

Furthermore, if thermal propagation between battery modules or cells is not properly controlled to cause a sudden fire or explosion, there is a high possibility of causing casualties to the users. For example, when thermal runaway occurs in an electric vehicle, if a certain amount of time is not allowed before a full-blown fire develops, occupants may not be able to safely escape.

### DISCLOSURE

### Technical Problem

The present disclosure is designed to solve the problems of the related art, and therefore the present disclosure is directed to providing a battery pack with an improved structure so that the emission of flame and the like generated inside the battery module may be appropriately controlled, and a vehicle including the same.

In addition, the present disclosure is directed to providing a structure capable of rapidly injecting a cooling liquid into a battery module when a thermal event occurs.

In addition, the present disclosure is directed to providing a structure capable of suppressing heat propagation between battery cells or battery modules.

In addition, the present disclosure is directed to providing a structure that reinforces the rigidity of a portion into which the cooling liquid is injected, thereby preventing damage or deformation due to the pressure of the cooling liquid.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery pack comprising: a bottom cover assembly; a battery module installed on an upper surface of the bottom cover assembly; a top cover assembly located above the battery module and having a flow path formed therein and an injection hole communicating with the flow path and facing the battery module; and a hole cover fixed between the top cover assembly and the battery module and configured to seal the injection hole.

In addition, the hole cover may be coupled to an upper surface of the battery module.

In addition, the hole cover may be coupled to a lower surface of the top cover assembly.

In addition, the hole cover may include a sealing portion configured to face the injection hole; and a first part extending from the sealing portion and configured to surround the sealing portion, and the sealing portion may have a smaller thickness than the first part.

In addition, the battery pack may further comprise a first reinforcement member disposed on a lower surface of the sealing portion.

In addition, the first reinforcement member may have a plate shape.

In addition, the first reinforcement member may have a mesh shape.

In addition, the hole cover may be formed in the sealing portion and has a connection hole facing the injection hole, and the first reinforcement member may seal the connection hole.

In addition, the sealing portion and the first reinforcement member may be formed integrally.

In addition, the battery pack may further comprise a second reinforcement member disposed on an upper surface of the sealing portion.

In addition, the sealing portion and the second reinforcement member may be formed integrally.

In addition, the hole cover may further include a reinforcement portion extending along a perimeter of the injection hole, and the reinforcement portion may have a smaller thickness than the first part and a greater thickness than the sealing portion.

In addition, the battery module may include a module case providing a space therein and having a top plate; and a battery cell located inside the module case, and the top plate may have an input hole facing the sealing portion.

In addition, the injection hole and the input hole may be configured to communicate with each other when a thermal event occurs.

In addition, the battery module may further include a support formed on an upper surface of the top plate and configured to partition the input hole and support the first reinforcement member

In addition, the support and the top plate may be formed integrally.

In addition, the hole cover may have a groove formed on a lower surface of the first part, and the support may be accommodated in the groove.

In addition, the hole cover may have an opening that exposes an upper surface of the battery module, and the battery pack may further comprise a heat transfer member arranged in the opening and configured to contact a lower surface of the top cover assembly and the upper surface of the battery module.

In addition, the hole cover may further include a second part extending along a perimeter of the upper surface of the battery module.

In one aspect of the present disclosure, there is also provided a vehicle, comprising the battery pack of the present disclosure.

### Advantageous Effects

According to at least one of the embodiments of the present disclosure, when a thermal event occurs, the cooling liquid may be rapidly injected into the battery module.

According to at least one of the embodiments of the present disclosure, deformation or damage of a portion into which the cooling liquid is injected may be prevented due to the pressure of the cooling liquid.

According to at least one of the embodiments of the present disclosure, the electrical safety of the battery pack may be improved.

According to at least one of the embodiments of the present disclosure, heat propagation between battery modules may be suppressed when a thermal event occurs.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing a battery pack according to an embodiment of the present disclosure.
FIG. 2 is an exploded view showing some components of the battery pack of FIG. 1.
FIG. 3 is an exploded view showing some components of the battery pack of FIG. 2.
FIG. 4 is a drawing showing the top cover assembly of FIG. 3.
FIG. 5 is a bottom perspective view showing the top cover assembly of FIG. 4.
FIG. 6 is an exploded view showing some components of the top cover assembly of FIG. 4.
FIG. 7 is an enlarged view showing a part D of FIG. 6.
FIG. 8 is an exploded view showing some components of the battery module of FIG. 3.
FIG. 9 is an exploded view showing some components of the battery module of FIG. 8.
FIG. 10 is an exploded view showing some components of the battery pack of FIG. 3.
FIG. 11 is a cross-sectional view taken along the line E-E' of FIG. 10.
FIG. 12 is a drawing showing the hole cover of FIG. 3.
FIG. 13 is a cross-sectional view taken along the line H-H' of FIG. 12.
FIG. 14 is a cross-sectional view taken along the line I-I' of FIG. 12.
FIG. 15 is a drawing showing the hole cover and the first reinforcement member of FIG. 12.
FIG. 16 is a drawing showing that the hole cover and the first reinforcement member of FIG. 15 are coupled.
FIG. 17 is a cross-sectional view taken along the line A-A' of FIG. 1.
FIG. 18 is a cross-sectional view of FIG. 17 filled with a cooling liquid.
FIG. 19 is a drawing showing the change in FIG. 18 when a thermal event occurs.
FIG. 20 is a cross-sectional view taken along the line B-B' of FIG. 1.
FIG. 21 is a cross-sectional view of FIG. 20 filled with a cooling liquid.
FIG. 22 is a drawing showing the change in FIG. 21 when a thermal event occurs.
FIG. 23 is an exploded view showing that a hole cover and a first reinforcement member according to another embodiment of the present disclosure are separated.
FIG. 24 is a drawing showing that the hole cover and the first reinforcement member of FIG. 23 are coupled.
FIG. 25 is a cross-sectional view showing another embodiment, taken along the line A-A' of FIG. 1.
FIG. 26 is a cross-sectional view showing another embodiment, taken along the line B-B' of FIG. 1.
FIG. 27 is an exploded view showing that a hole cover and a first reinforcement member according to still another embodiment of the present disclosure are separated.
FIG. 28 is a drawing showing that the hole cover and the first reinforcement member of FIG. 27 are coupled.
FIG. 29 is a cross-sectional view showing still another embodiment, taken along the line A-A' of FIG. 1.
FIG. 30 is a cross-sectional view showing still another embodiment, taken along the line B-B' of FIG. 1.
FIG. 31 is an exploded view showing a hole cover and a first reinforcement member according to still another embodiment of the present disclosure.
FIG. 32 is a drawing showing that the hole cover and the first reinforcement member of FIG. 31 are separated.
FIG. 33 is a drawing showing that the hole cover and the first reinforcement member of FIG. 32 are coupled.
FIG. 34 is a cross-sectional view showing still another embodiment, taken along the line A-A' of FIG. 1.
FIG. 35 is a cross-sectional view showing still another embodiment, taken along the line B-B' of FIG. 1.
FIG. 36 is an exploded view showing a hole cover according to still another embodiment of the present disclosure.
FIG. 37 is a bottom view showing the hole cover of FIG. 36.
FIG. 38 is a cross-sectional view showing still another embodiment, taken along the line A-A' of FIG. 1.
FIG. 39 is a cross-sectional view showing still another embodiment, taken along the line B-B' of FIG. 1.
FIG. 40 is an exploded view showing some components of a battery pack according to still another embodiment of the present disclosure.
FIG. 41 is a bottom perspective view showing the hole cover and the first reinforcement member of FIG. 40.
FIG. 42 is a cross-sectional view showing still another embodiment, taken along the line A-A' of FIG. 1.
FIG. 43 is a cross-sectional view showing still another embodiment, taken along the line C-C' of FIG. 1.
FIG. 44 is a cross-sectional view showing still another embodiment, taken along the line B-B' of FIG. 1.
FIG. 45 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

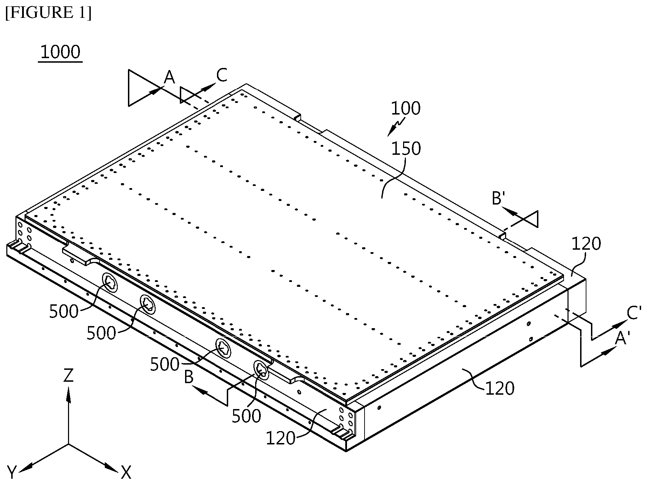

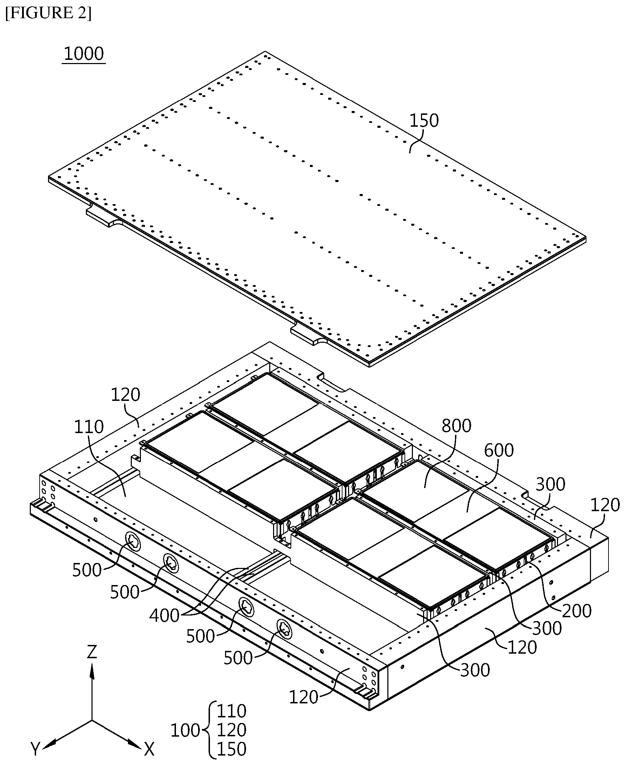

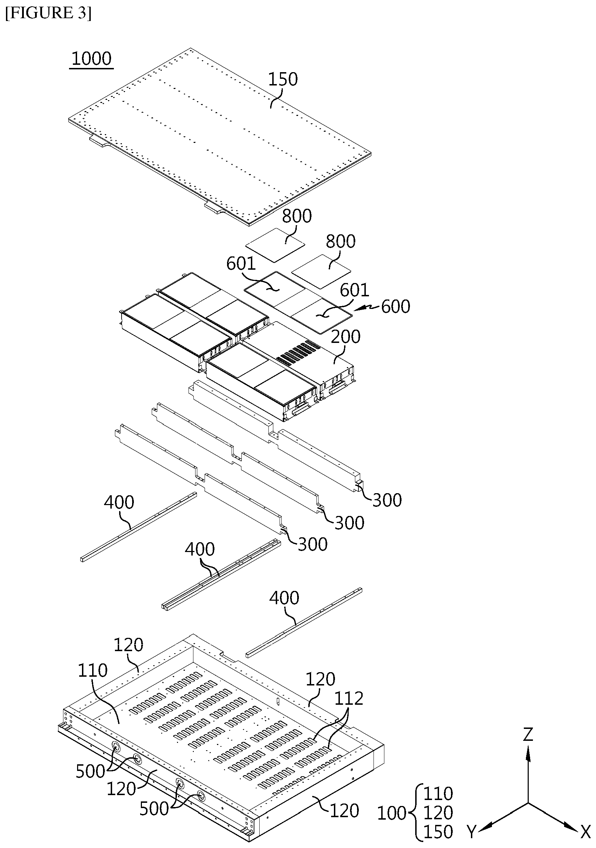

FIG. 1 is a drawing showing a battery pack 1000 according to an embodiment of the present disclosure. FIG. 2 is an exploded view showing some components of the battery pack 1000 of FIG. 1. FIG. 3 is an exploded view showing some components of the battery pack 1000 of FIG. 2.

Referring to FIGS. 1 to 3, the case 100 may provide a space therein. The case 100 may include a bottom cover assembly 110. The bottom cover assembly 110 may have a square shape. The bottom cover assembly 110 may have a flat shape. The bottom cover assembly 110 may form the outer appearance of the battery pack 1000. The bottom cover assembly 110 may provide an inner space of the battery pack 1000.

The case 100 may include a side wall 120. The side wall 120 may be installed, fastened, fixed, coupled, or attached to the upper surface of the bottom cover assembly 110. The side wall 120 may be provided along the perimeter of the bottom cover assembly 110. For example, four side walls 120 may be provided. The side wall 120 may provide an inner space for the battery pack 1000.

The case 100 may include a top cover assembly 150. The top cover assembly 150 may have a square plate shape. The top cover assembly 150 may have a flat plate shape. The top cover assembly 150 may form the outer appearance of the battery pack 1000. The top cover assembly 150 may cover the inner space of the battery pack 1000. The top cover assembly 150 may be installed, fastened, fixed, coupled, or attached to the side wall 120.

The battery pack 1000 according to an embodiment of the present disclosure may include a partition wall 300. The partition wall 300 may be provided in plurality. The partition wall 300 may be installed, fastened, fixed, coupled, or attached to the upper surface of the bottom cover assembly 110. The partition wall 300 may partition the inner space of the battery pack 1000. The partition wall 300 may extend along the front and rear direction or the X-axis direction. The plurality of partition walls 300 may be arranged along the right and left direction or the Y-axis direction.

The battery pack 1000 according to an embodiment of the present disclosure may include an installation beam 400. The installation beam 400 may be provided in plurality. The installation beam 400 may be installed, fastened, fixed, coupled, or attached to the upper surface of the bottom cover assembly 110. The installation beam 400 may partition the inner space of the battery pack 1000. The installation beam 400 may extend along the right and left direction or the Y-axis direction. The plurality of installation beams 400 may be arranged along the front and rear direction or the X-axis direction.

The battery module 200 may be arranged inside the case 100. The battery module 200 may be installed, fastened, fixed, coupled, or attached to the upper surface of the bottom cover assembly 110. The battery module 200 may be installed, fastened, fixed, coupled, or attached to the installation beam 400. The battery module 200 may be provided in plurality. For example, four battery modules 200 may be provided. The battery module 200 may be located in the space partitioned by the partition wall 300.

The venting device 500 may be installed in the side wall 120. For example, the venting device 500 may be installed in the left side wall 120. For example, the venting device 500 may be a gas valve. The venting device 500 may open to discharge gas when the pressure inside the case 100 increases. In addition, the venting device 500 may block external air from flowing into the case 100. The venting device 500 may be provided in plurality.

The hole cover 600 may be arranged between the top cover assembly 150 and the battery module 200. The hole cover 600 may be provided for each battery module 200. For example, four hole covers 600 may be provided.

The heat transfer member 800 may be arranged between the top cover assembly 150 and the battery module 200. The heat transfer member 800 may be provided for each battery module 200. For example, the heat transfer member 800 may be made of a material with high thermal conductivity. For example, the heat transfer member 800 may be a resin.

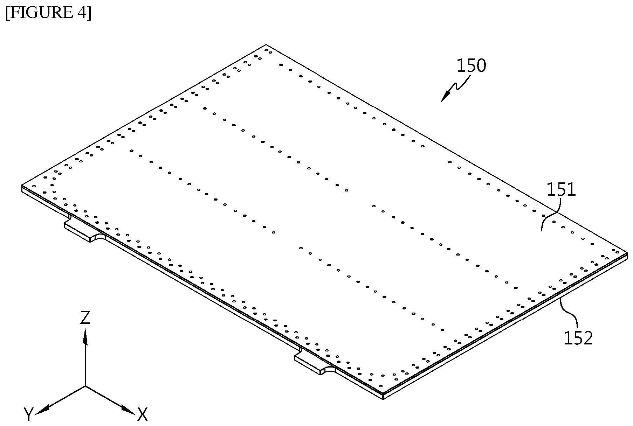

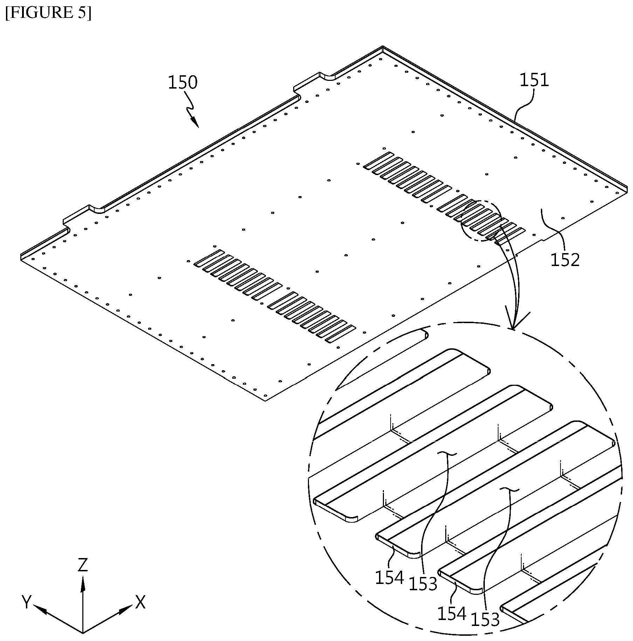

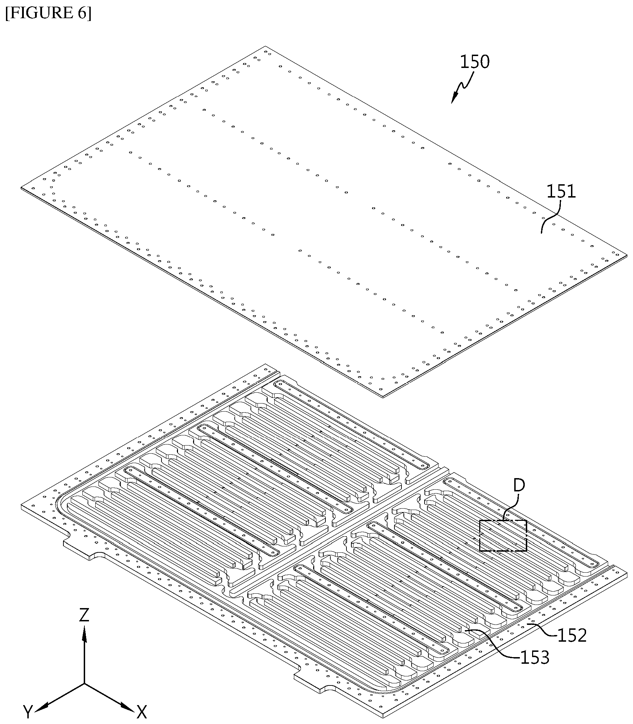

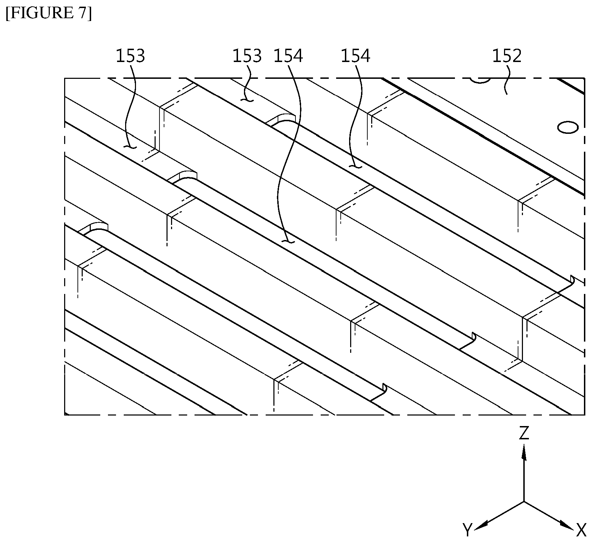

FIG. 4 is a drawing showing the top cover assembly 150 of FIG. 3. FIG. 5 is a bottom perspective view showing the top cover assembly 150 of FIG. 4. FIG. 6 is an exploded view showing some components of the top cover assembly 150 of FIG. 4. FIG. 7 is an enlarged view showing a part D of FIG. 6.

Referring to FIGS. 4 to 7, the top cover assembly 150 may include an upper plate 151 and a lower plate 152. The upper plate 151 may have a rectangular shape. The upper plate 151 may form the outer appearance of the battery pack 1000. The lower plate 152 may have a rectangular shape. The lower plate 152 may form the outer appearance of the battery pack 1000. The upper plate 151 may be disposed above the lower plate 152. The top cover assembly 150 may include a cooling flow path 153 therein. The cooling flow path 153 may be disposed between the upper plate 151 and the lower plate 152. The top cover assembly 150 may have an injection hole 154. The injection hole 154 may be formed in the lower plate 152. The injection hole 154 may communicate with the cooling flow path 153. The injection hole 154 may be provided in plurality. The injection hole 154 may extend along the front and rear direction or the X-axis direction. The plurality of injection holes 154 may be arranged along the right and left direction or the Y-axis direction.

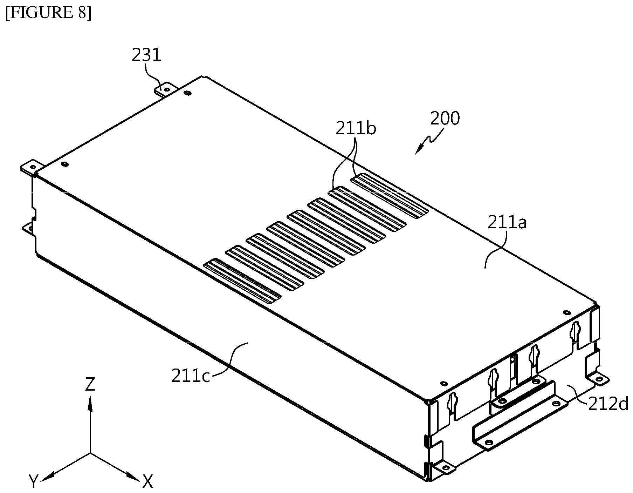

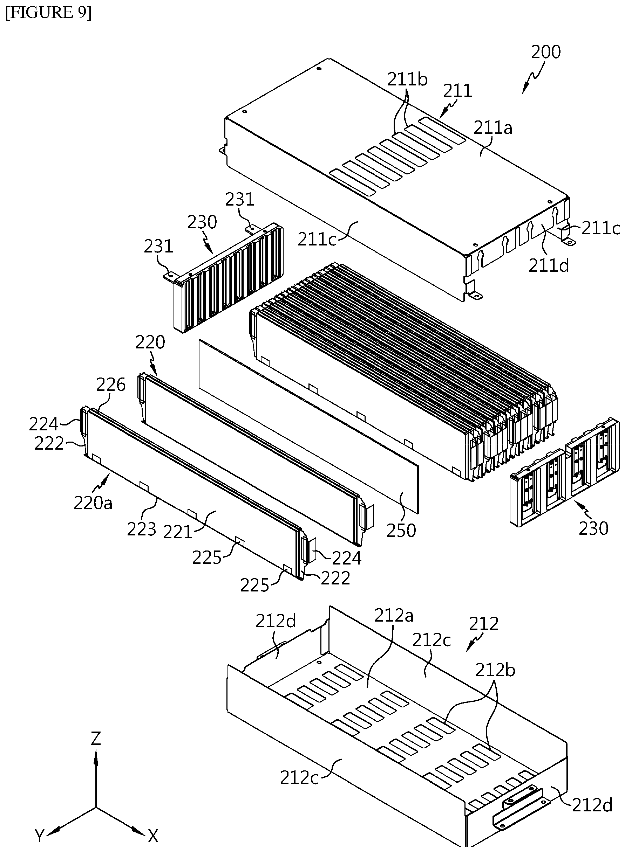

FIG. 8 is an exploded view showing some components of the battery module 200 of FIG. 3. FIG. 9 is an exploded view showing some components of the battery module 200 of FIG. 8.

Referring to FIGS. 8 and 9, the module case 210 may have a rectangular parallelepiped shape. The module case 210 may form the outer appearance of the battery module 200. The module case 210 may provide a space therein. The module case 210 may include an upper frame 211 and a lower frame 212.

The upper frame 211 may include a top plate 211a. The top plate 211a may have an input hole 211b. The input hole 211b may extend along the front and rear direction or the X-axis direction. The input hole 211b may be provided in plurality. The plurality of input holes 211b may be arranged along the right and left direction or the Y-axis direction.

The upper frame 211 may include a first side plate 211c. The first side plate 211c may be provided as a pair. The first side plate 211c may be provided at the left and right sides of the top plate 211a, respectively. The first side plate 211c may extend downward from the top plate 211a.

The upper frame 211 may include a first end plate 211d. The first end plate 211d may be provided as a pair. The first end plate 211d may be provided at the front and rear sides of the top plate 211a, respectively. The first end plate 211d may extend downward from the top plate 211a.

The lower frame 212 may include a bottom plate 212a. The bottom plate 212a may have a venting hole 212b. The venting hole 212b may extend along the front and rear direction or the X-axis direction. The venting hole 212b may be provided in plurality. The plurality of venting holes 212b may be arranged along the right and left direction or the Y-axis direction.

The lower frame 212 may include a second side plate 212c. The second side plate 212c may be provided as a pair. The second side plate 212c may be provided at the left and right sides of the bottom plate 212a, respectively. The second side plate 212c may extend upward from the bottom plate 212a.

The lower frame 212 may include a second end plate 212d. The second end plates 212d may be provided as a pair. The second end plate 212d may be provided at the front and rear sides of the bottom plate 212a, respectively. The second end plate 212d may extend upward from the bottom plate 212a.

The upper frame 211 and the lower frame 212 may be coupled, fastened, attached, or assembled. The first side plate 211c may be located at the outer side of the second side plate 212c. The first end plate 211d may be located at the outer side of the second end plate 212d. The top plate 211a and the bottom plate 212a may face each other.

The battery cell 220 may be accommodated inside the module case 210. The battery cell 220 may be provided in plurality. The battery cell 220 may refer to a secondary battery. In particular, the battery cell 220 may be a pouch-type secondary battery. However, the shape of the battery cell 220 is not limited to a pouch shape, and the battery cell 220 may have various shapes such as a cylindrical shape or a rectangular parallelepiped shape.

The battery cell 220 may extend along the front and rear direction or the X-axis direction. The battery cell 220 may have a cell case 220a providing a space therein. The cell case 220a may include an accommodation portion 221 containing an electrode assembly, a first sealing portion 222 protruding forward and rearward from the accommodation portion 221, respectively, and a second sealing portion 223 protruding downward from the accommodation portion 221. The first sealing portion 222 and the second sealing portion 223 may be formed by bonding or attaching the cell case 220a. The top end of the accommodation portion 221 may be referred to as a folding portion 226. The folding portion 226 may be formed by folding the cell case 220a. In addition, the battery cell 220 may include electrode leads 224 protruding forward and rearward from the first sealing portion 222, respectively. The electrode leads 224 may protrude forward and rearward from each battery cell 220. The plurality of battery cells 220 may be stacked along the right and left direction or the Y-axis direction. The battery cell 220 may include an adhesive member 225 that folds and fixes the second sealing portion 223 to the accommodation portion 221. The adhesive member 225 may bring the second sealing portion 223 into close contact with the accommodation portion 221. The adhesive member 225 may be provided in plurality. The plurality of adhesive members 225 may be arranged along the front and rear direction or the X-axis direction.

The barrier 250 may be located between the plurality of battery cells 220. The barrier 250 may be located between at least some of the battery cells 220 and/or at the periphery of the stack. For example, the barrier 250 may be configured to be arranged between every two battery cells 220 stacked in the right and left direction.

The barrier 250 may contain an elastic material to enable swelling absorption of the battery cell 220. For example, the barrier 250 may be made of a foam material such as polyurethane. Alternatively, the barrier 250 may contain a material capable of blocking heat or flame. For example, the barrier 250 may contain an insulating or fire-retardant material such as silicone or mica.

The front bus bar frame assembly 230 may be provided at the front side of the plurality of battery cells 220. The front bus bar frame assembly 230 may be electrically connected to the front electrode leads 224 of the plurality of battery cells 220.

The rear bus bar frame assembly 230 may be provided at the rear side of the plurality of battery cells 220. The rear bus bar frame assembly 230 may be electrically connected to the rear electrode leads 224 of the plurality of battery cells 220. The rear bus bar frame assembly 230 may include a power terminal 231.

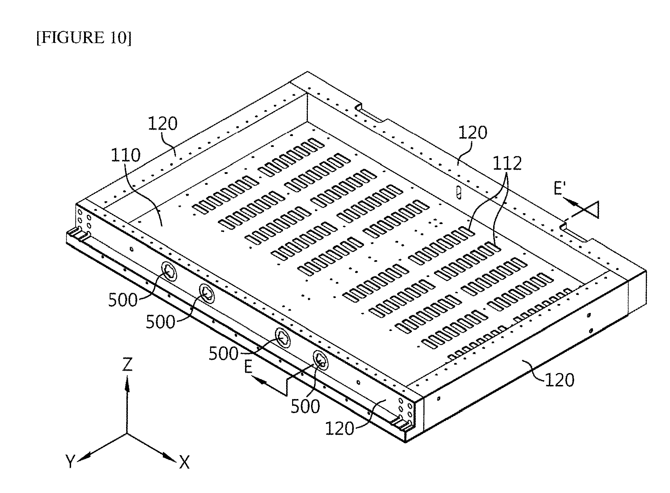

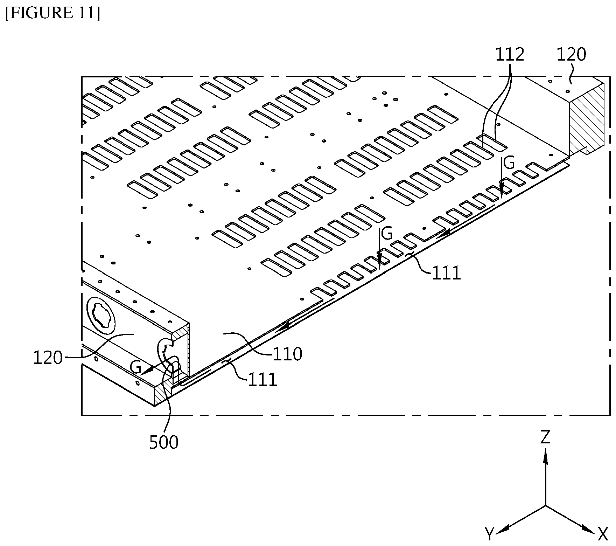

FIG. 10 is an exploded view showing some components of the battery pack 1000 of FIG. 3. FIG. 11 is a cross-sectional view taken along the line E-E' of FIG. 10.

Referring to FIGS. 10 and 11, the bottom cover assembly 110 may form the outer appearance of the battery pack 1000. The bottom cover assembly 110 may have a rectangular shape. The bottom cover assembly 110 may have a venting flow path 111 therein. The bottom cover assembly 110 may have a discharge hole 112. The discharge hole 112 may be formed in the upper surface of the bottom cover assembly 110. The discharge hole 112 may communicate with the venting flow path 111. The discharge hole 112 may be provided in plurality. The discharge hole 112 may extend along the front and rear direction or the X-axis direction. The plurality of discharge holes 112 may be arranged along the right and left direction or the Y-axis direction. The discharge hole 112 may be provided to correspond to the venting hole 212b in one-to-one relationship. The discharge hole 112 may have substantially the same size as the venting hole 212b.

The venting flow path 111 may communicate with the inside of the side wall 120. The inside of the side wall 120 may communicate with the venting device 500. When a thermal event occurs, the venting gas G generated from the battery cell 220 may be discharged through the venting hole 212b of the battery module 200 to the discharge hole 112 and the venting flow path 111. The venting gas G may flow toward the venting device 500 along the venting flow path 111. The venting gas G may be discharged to the outside of the battery pack 1000 through the venting device 500.

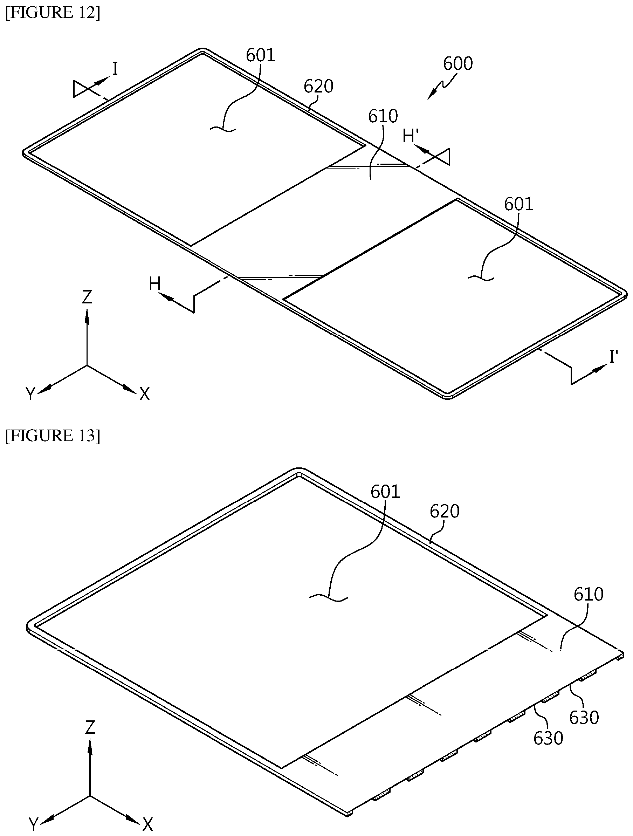

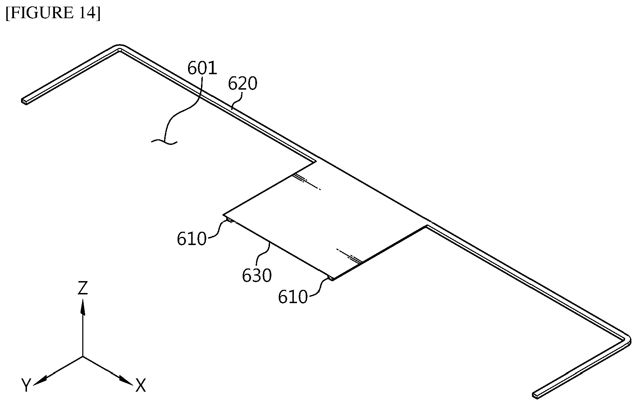

FIG. 12 is a drawing showing the hole cover 600 of FIG. 3. FIG. 13 is a cross-sectional view taken along the line H-H' of FIG. 12. FIG. 14 is a cross-sectional view taken along the line I-I' of FIG. 12.

Referring to FIGS. 12 to 14, the hole cover 600 may include a first part 610 and a sealing portion 630. The first part 610 and the sealing portion 630 may be formed integrally. The first part 610 and the sealing portion 630 may have a rectangular shape. The sealing portion 630 may have a smaller thickness than the first part 610. The sealing portion 630 may extend along the front and rear direction or the X-axis direction. The sealing portion 630 may be provided in plurality. The plurality of sealing portions 630 may be arranged along the right and left direction or the Y-axis direction.

The second part 620 may extend from the first part 610. The second part 620 may extend along the perimeter of the upper surface of the battery module 200. The second part 620 may extend along the perimeter of the top plate 211a. The hole cover 600 may have a pair of openings 601. Each opening 601 may be surrounded by the second part 620 and the first part 610. The first part 610 and the sealing portion 630 may be located between the pair of openings 601. Each opening 601 may have a rectangular shape.

The hole cover 600 may be formed integrally. The first part 610 and the second part 620 may be formed integrally. The hole cover 600 may contain a plastic material. The hole cover 600 may contain a plastic material having a low melting point. Alternatively, the hole cover 600 may contain a metal material. The hole cover 600 may contain a metal material having a low melting point. Since the sealing portion 630 has a small thickness, the sealing portion 630 may easily melt or be damaged when exposed to heat.

The hole cover 600 may be adhered to the upper surface of the battery module 200. The hole cover 600 may be adhered to the upper surface of the top plate 211a. The hole cover 600 may be adhered to the lower surface of the top cover assembly 150. The hole cover 600 may be adhered to the lower surface of the lower plate 152.

If the hole cover 600 contains a plastic material, the hole cover 600 may be coupled to the upper surface of the battery module 200 by heat fusion. If the hole cover 600 contains a plastic material, the hole cover 600 may be coupled to the upper surface of the top plate 211a by heat fusion. If the hole cover 600 contains a plastic material, the hole cover 600 may be adhered to the lower surface of the top cover assembly 150. If the hole cover 600 contains a plastic material, the hole cover 600 may be coupled to the lower surface of the lower plate 152 by heat fusion.

If the hole cover 600 contains a metal material, the hole cover 600 may be coupled to the upper surface of the battery module 200 by brazing welding. If the hole cover 600 contains a metal material, the hole cover 600 may be coupled to the upper surface of the top plate 211a by brazing welding. If the hole cover 600 contains a metal material, the hole cover 600 may be coupled to the lower surface of the top cover assembly 150 by brazing welding. If the hole cover 600 contains a metal material, the hole cover 600 may be coupled to the lower surface of the lower plate 152 by brazing welding.

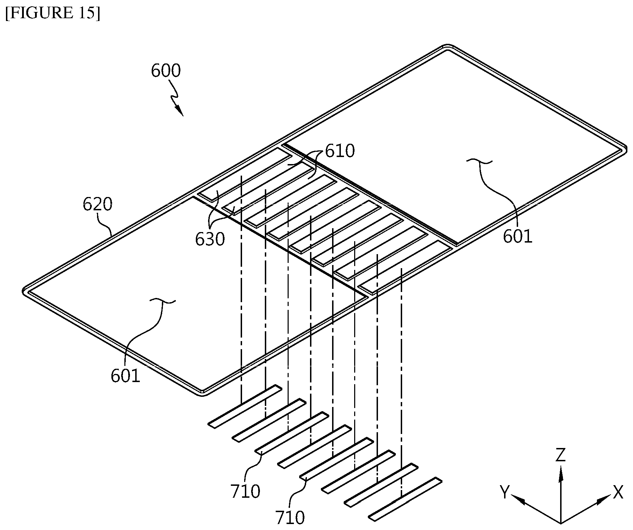

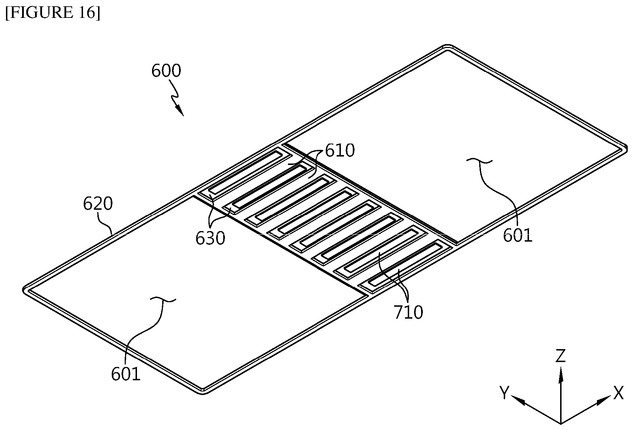

FIG. 15 is a drawing showing the hole cover 600 and the first reinforcement member 710 of FIG. 12. FIG. 16 is a drawing showing that the hole cover 600 and the first reinforcement member 710 of FIG. 15 are coupled.

Referring to FIGS. 15 and 16, the first reinforcement member 710 may be coupled, attached, fastened, or fixed to the hole cover 600. The first reinforcement member 710 may be coupled, attached, fastened, or fixed to the lower surface of the sealing portion 630. The first reinforcement member 710 may be provided in plurality. The first reinforcement member 710 may be provided to correspond to the sealing portion 630 in one-to-one relationship. The first reinforcement member 710 may have a square plate shape. The first reinforcement member 710 and the sealing portion 630 may contain the same material. The first reinforcement member 710 and the sealing portion 630 may also be formed integrally.

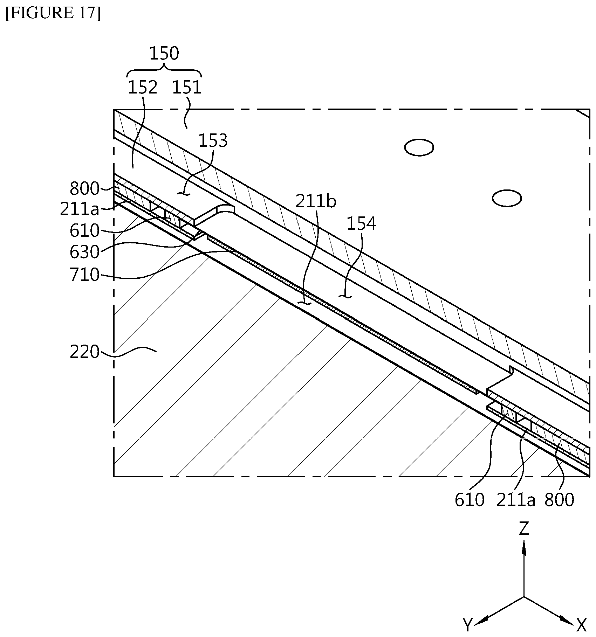

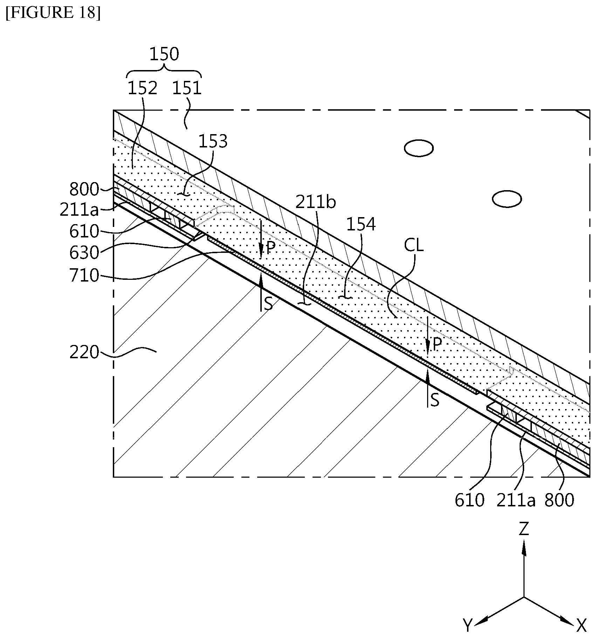

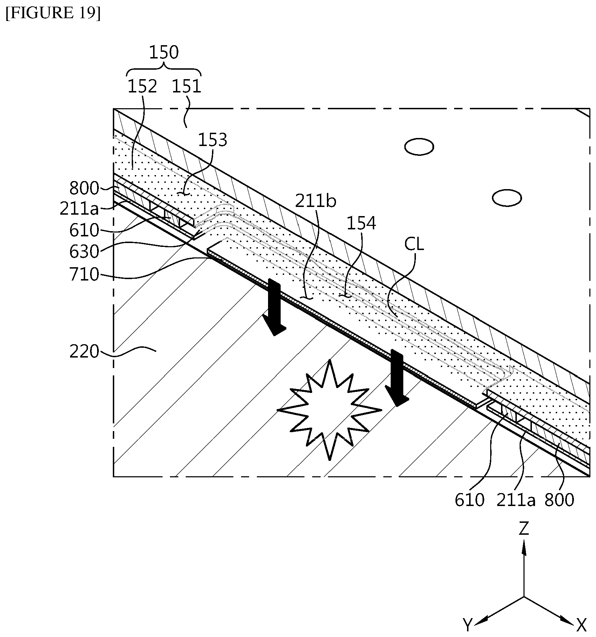

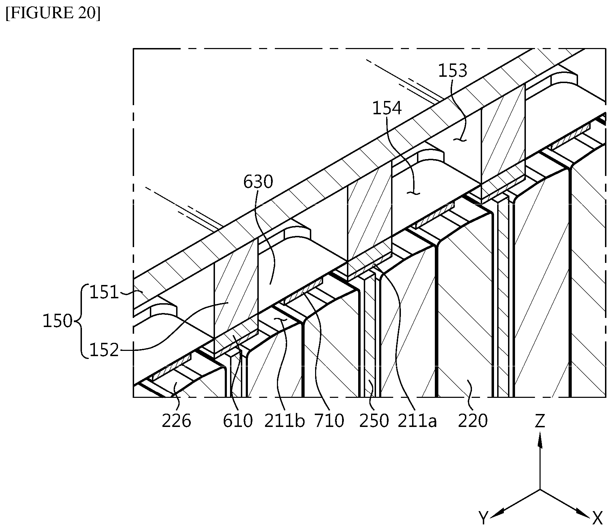

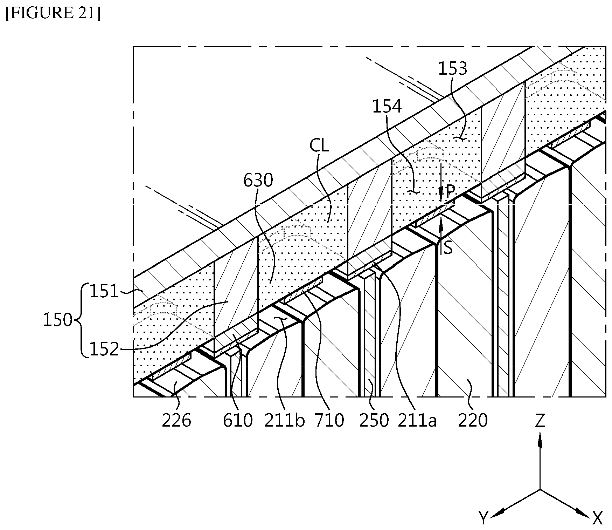

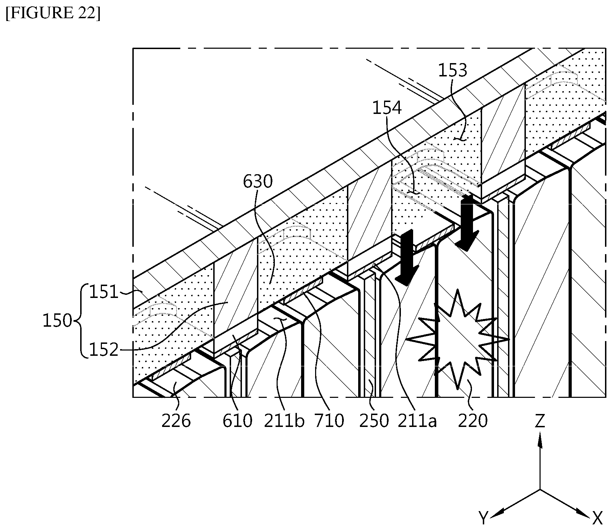

FIG. 17 is a cross-sectional view taken along the line A-A' of FIG. 1. FIG. 18 is a cross-sectional view of FIG. 17 filled with a cooling liquid CL. FIG. 19 is a drawing showing the change in FIG. 18 when a thermal event occurs. FIG. 20 is a cross-sectional view taken along the line B-B' of FIG. 1. FIG. 21 is a cross-sectional view of FIG. 20 filled with a cooling liquid CL. FIG. 22 is a drawing showing the change in FIG. 21 when a thermal event occurs.

Referring to FIGS. 17 to 22, the sealing portion 630 may seal the injection hole 154. The inside of the cooling flow path 153 may be filled with a cooling liquid CL. The cooling liquid CL may flow along the cooling flow path 153. For example, the cooling liquid CL may be water. The sealing portion 630 may seal the injection hole 154 to prevent the cooling liquid CL from leaking through the injection hole 154.

The injection hole 154 may face the input hole 211b. The sealing portion 630 may be arranged between the injection hole 154 and the input hole 211b. The first reinforcement member 710 may be arranged on the lower surface of the sealing portion 630.

The hole cover 600 may be fixed between the top cover assembly 150 and the battery module 200. The hole cover 600 may be fixed between the lower plate 152 of the top cover assembly 150 and the top plate 211a.

The sealing portion 630 may receive a pressure P from the cooling liquid CL flowing in the cooling flow path 153. The first reinforcement member 710 may support the sealing portion 630. The first reinforcement member 710 may provide a support force S to the sealing portion 630. By supporting the sealing portion 630, the first reinforcement member 710 may prevent the sealing portion 630 from sagging or deforming due to the pressure P of the cooling liquid CL. Due to the first reinforcement member 710, the sealing portion 630 may stably seal the injection hole 154.

The first reinforcement member 710 may have a smaller size than the injection hole 154. Therefore, when a thermal event occurs, the sealing portion 630 may easily melt or be damaged. At this time, the first reinforcement member 710 may also melt or be damaged. Alternatively, if the sealing portion 630 melts or is damaged, the first reinforcement member 710 may fall downward. By melting or damaging the sealing portion 630, the injection hole 154 and the input hole 211b may be communicated. The cooling liquid CL may flow into the battery module 200 through the injection hole 154 and the input hole 211b. Therefore, the battery cell 220 in which the thermal event has occurred may be quickly cooled. Alternatively, the battery cell 220 in which a fire has occurred may be quickly extinguished.

The heat transfer member 800 may be arranged between the battery module 200 and the top cover assembly 150. The heat transfer member 800 may be in contact with, coupled to, or attached to the battery module 200. The heat transfer member 800 may be in contact with, coupled to, or attached to the top cover assembly 150.

The heat transfer member 800 may be disposed between the top plate 211a and the lower plate 152. The heat transfer member 800 may be in contact with, coupled to, or attached to the top plate 211a. The heat transfer member 800 may be in contact with, coupled to, or attached to the lower plate 152. The heat transfer member 800 may be disposed in the opening 601. For example, the heat transfer member 800 may be a resin. The first part 610 and the second part 620 may limit the filling range of the heat transfer member 800. The heat transfer member 800 may be surrounded by the first part 610 and the second part 620. Heat generated from the battery module 200 may be transferred to the top cover assembly 150 through the heat transfer member 800.

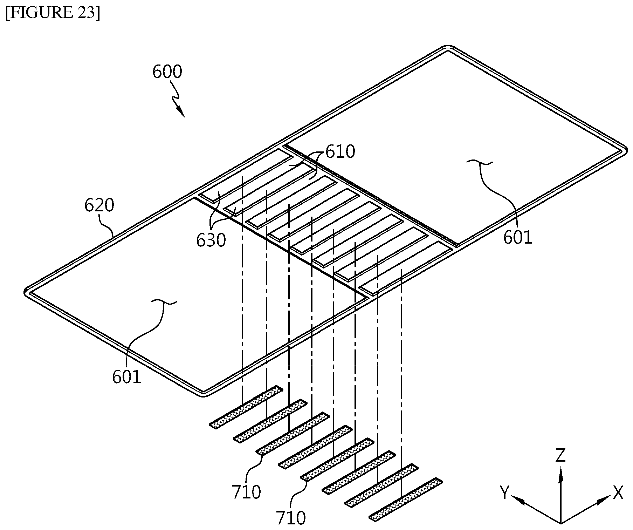

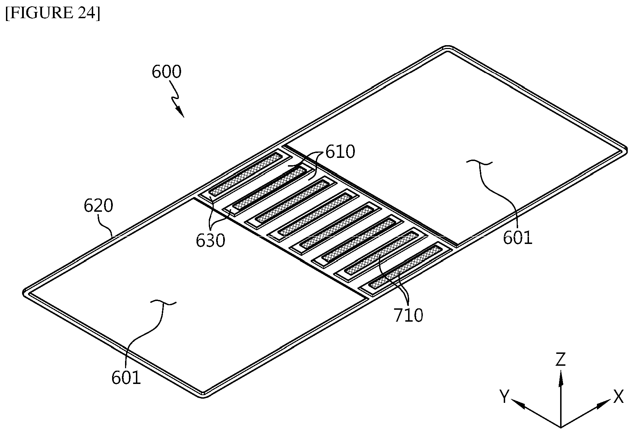

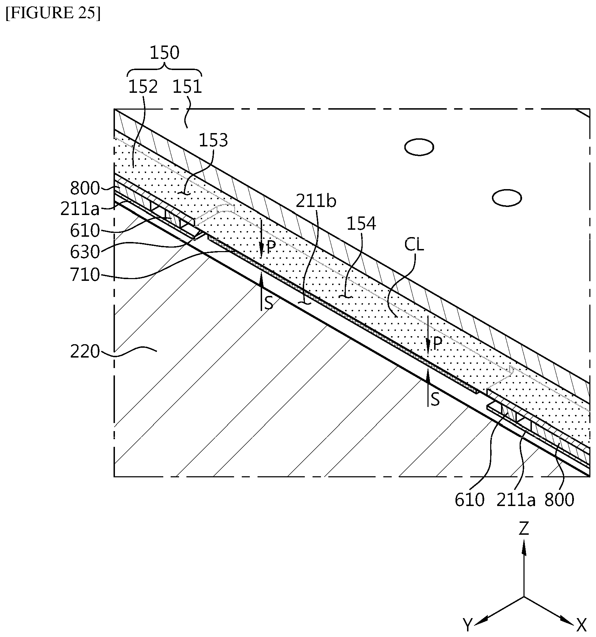

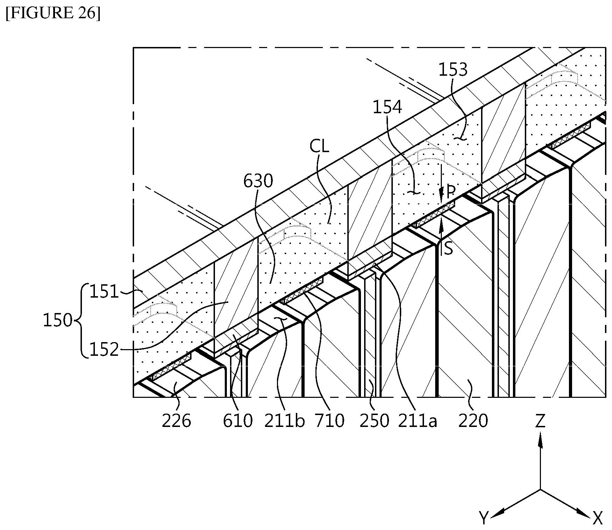

FIG. 23 is an exploded view showing that a hole cover 600 and a first reinforcement member 710 according to another embodiment of the present disclosure are separated. FIG. 24 is a drawing showing that the hole cover 600 and the first reinforcement member 710 of FIG. 23 are coupled. FIG. 25 is a cross-sectional view showing another embodiment, taken along the line A-A' of FIG. 1. FIG. 26 is a cross-sectional view showing another embodiment, taken along the line B-B' of FIG. 1.

Referring to FIGS. 23 to 26, the first reinforcement member 710 may be coupled, attached, fastened, or fixed to the hole cover 600. The first reinforcement member 710 may be coupled, attached, fastened, or fixed to the lower surface of the sealing portion 630. The first reinforcement member 710 may be provided in plurality. The first reinforcement member 710 may be provided to correspond to the sealing portion 630 in one-to-one relationship. The first reinforcement member 710 may have a mesh structure. The first reinforcement member 710 and the sealing portion 630 may contain the same material. The first reinforcement member 710 and the sealing portion 630 may be formed integrally.

The sealing portion 630 may receive a pressure P from the cooling liquid CL flowing in the cooling flow path 153. The first reinforcement member 710 may support the sealing portion 630. The first reinforcement member 710 may provide a support force S to the sealing portion 630. By supporting the sealing portion 630, the first reinforcement member 710 may prevent the sealing portion 630 from sagging or deforming due to the pressure P of the cooling liquid CL. Due to the first reinforcement member 710, the sealing portion 630 may stably seal the injection hole 154.

Since the first reinforcement member 710 has a mesh structure, the first reinforcement member 710 may stably support the sealing portion 630 while having a light weight compared to the plate shape.

The first reinforcement member 710 may have a smaller size than the injection hole 154. Therefore, when a thermal event occurs, the sealing portion 630 may easily melt or be damaged. At this time, the first reinforcement member 710 may also melt or be damaged. Alternatively, if the sealing portion 630 melts or is damaged, the first reinforcement member 710 may fall downward. By melting or damaging the sealing portion 630, the injection hole 154 and the input hole 211b may be communicated. The cooling liquid CL may flow into the battery module 200 through the injection hole 154 and the input hole 211b. Therefore, the battery cell 220 in which the thermal event has occurred may be quickly cooled. Alternatively, the battery cell 220 in which a fire has occurred may be quickly extinguished.

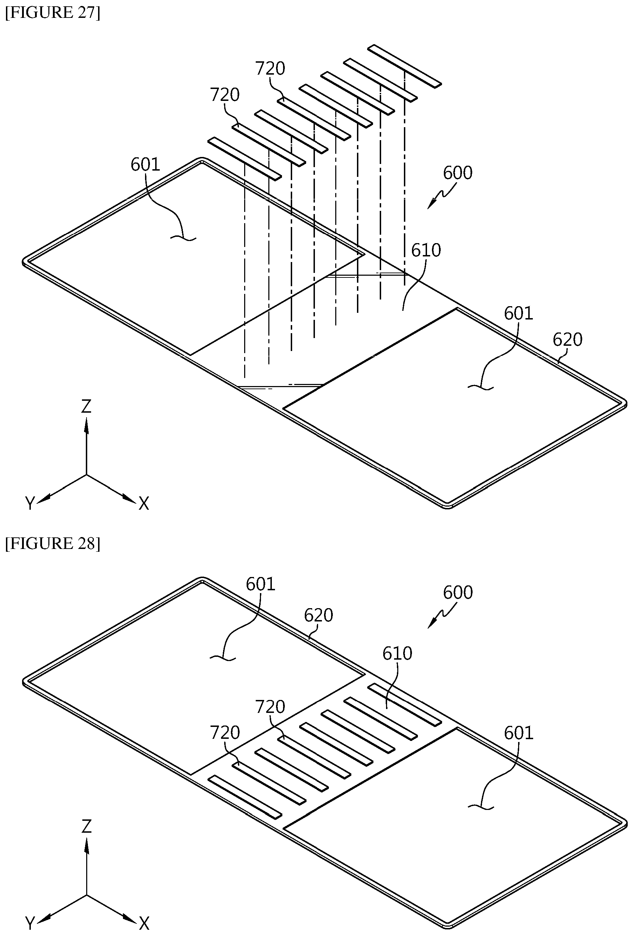

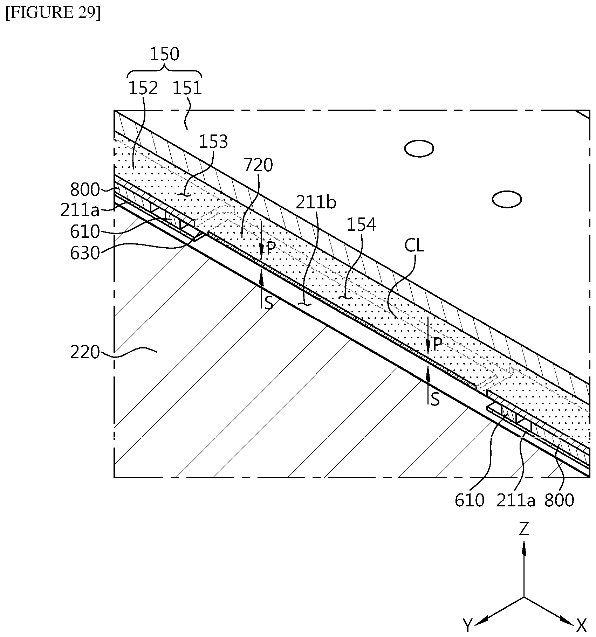

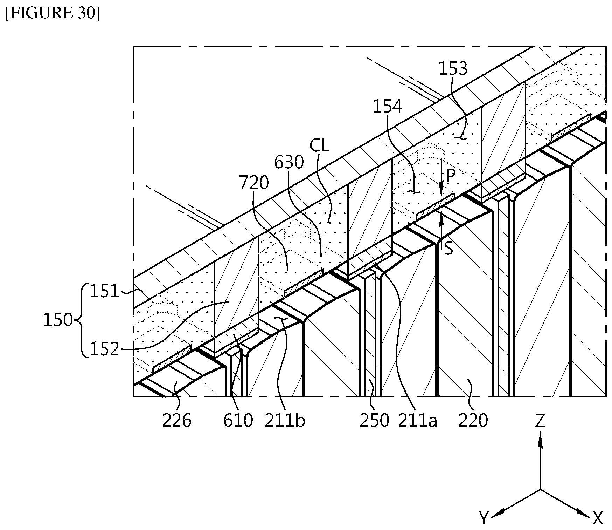

FIG. 27 is an exploded view showing that a hole cover 600 and a first reinforcement member 720 according to still another embodiment of the present disclosure are separated. FIG. 28 is a drawing showing that the hole cover 600 and the first reinforcement member 720 of FIG. 27 are coupled. FIG. 29 is a cross-sectional view showing still another embodiment, taken along the line A-A' of FIG. 1. FIG. 30 is a cross-sectional view showing still another embodiment, taken along the line B-B' of FIG. 1.

Referring to FIGS. 27 to 30, the second reinforcement member 720 may be coupled, attached, fastened, or fixed to the hole cover 600. The second reinforcement member 720 may be coupled, attached, fastened, or fixed to the upper surface of the sealing portion 630. The second reinforcement member 720 may be provided in plurality. The second reinforcement member 720 may be provided to correspond to the sealing portion 630 in one-to-one relationship. The second reinforcement member 720 may have a square plate shape. The second reinforcement member 720 and the sealing portion 630 may contain the same material. The second reinforcement member 720 and the sealing portion 630 may be formed integrally.

The sealing portion 630 may seal the injection hole 154 to prevent the cooling liquid CL from leaking through the injection hole 154. The injection hole 154 may face the input hole 211b. The sealing portion 630 may be arranged between the injection hole 154 and the input hole 211b.

The sealing portion 630 may receive a pressure P from the cooling liquid CL flowing in the cooling flow path 153. The second reinforcement member 720 may be located inside the injection hole 154. The second reinforcement member 720 may support the sealing portion 630. The second reinforcement member 720 may provide a support force S to the sealing portion 630. By supporting the sealing portion 630, the second reinforcement member 720 may prevent the sealing portion 630 from sagging or deforming due to the pressure P of the cooling liquid CL. Due to the second reinforcement member 720, the sealing portion 630 may stably seal the injection hole 154.

The second reinforcement member 720 may have a smaller size than the injection hole 154. Therefore, when a thermal event occurs, the sealing portion 630 may easily melt or be damaged. At this time, the second reinforcement member 720 may also melt or be damaged. Alternatively, if the sealing portion 630 melts or is damaged, the second reinforcement member 720 may fall downward. By melting or damaging the sealing portion 630, the injection hole 154 and the input hole 211b may be communicated. The cooling liquid CL may flow into the battery module 200 through the injection hole 154 and the input hole 211b. Therefore, the battery cell 220 in which a thermal event has occurred may be quickly cooled. Alternatively, the battery cell 220 in which a fire has occurred may be quickly extinguished.

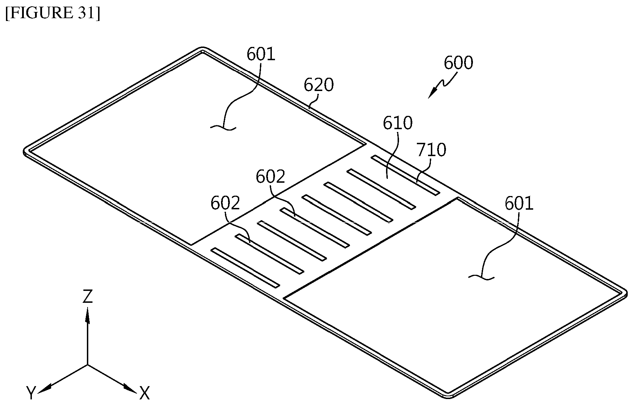

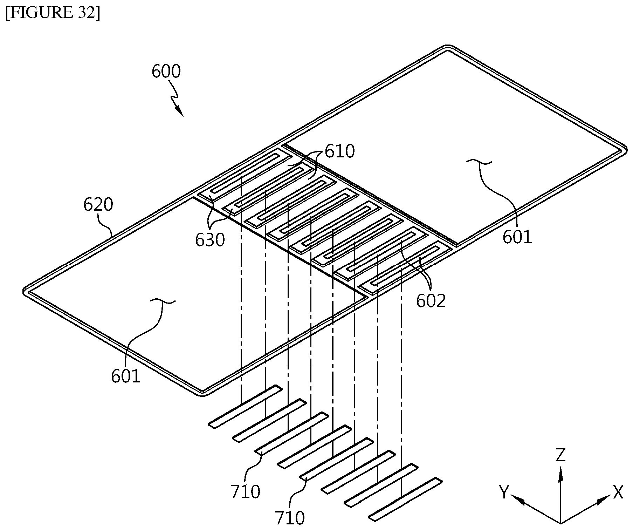

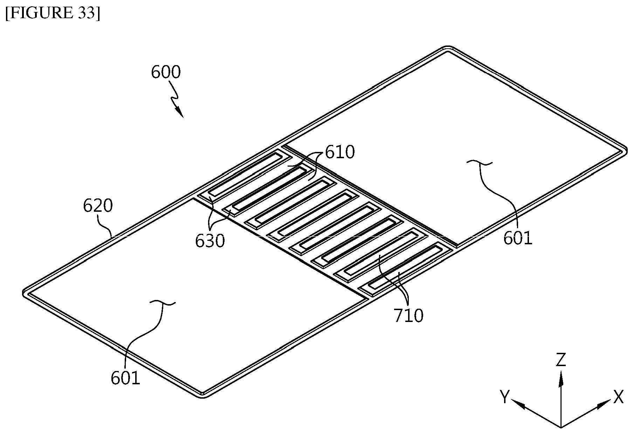

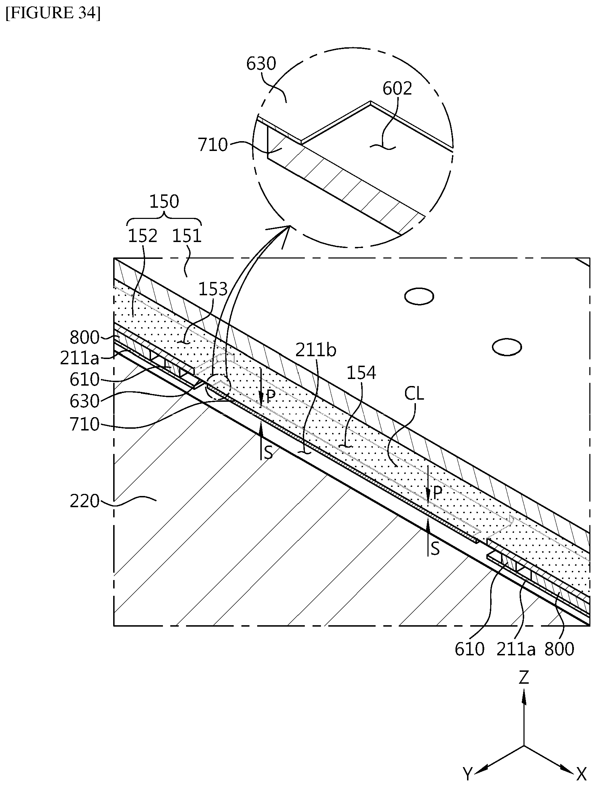

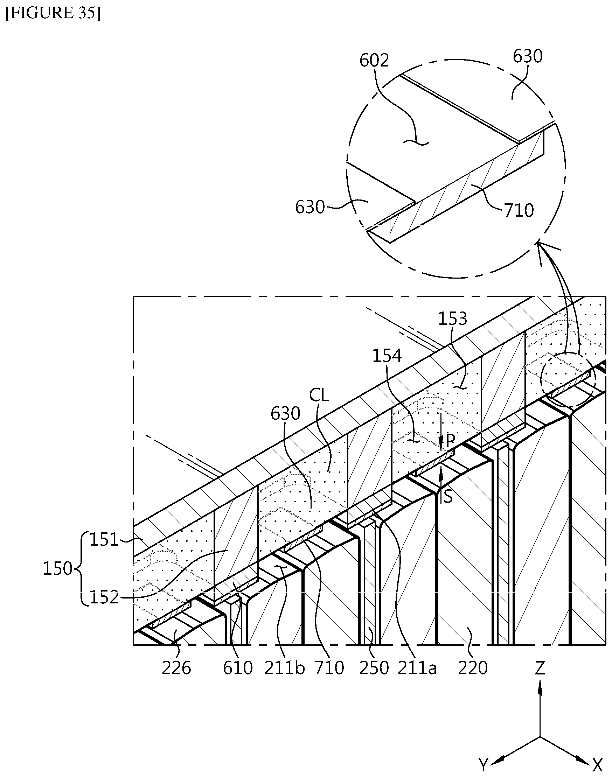

FIG. 31 is an exploded view showing a hole cover 600 and a first reinforcement member 710 according to still another embodiment of the present disclosure. FIG. 32 is a drawing showing that the hole cover 600 and the first reinforcement member 710 of FIG. 31 are separated. FIG. 33 is a drawing showing that the hole cover 600 and the first reinforcement member 710 of FIG. 32 are coupled. FIG. 34 is a cross-sectional view showing still another embodiment, taken along the line A-A' of FIG. 1. FIG. 35 is a cross-sectional view showing still another embodiment, taken along the line B-B' of FIG. 1.

Referring to FIGS. 31 to 35, the sealing portion 630 may have a connection hole 602. The connection hole 602 may face the injection hole 154. The first reinforcement member 710 may be coupled, attached, fastened, or fixed to the hole cover 600. The first reinforcement member 710 may be coupled, attached, fastened, or fixed to the lower surface of the sealing portion 630. The first reinforcement member 710 may seal the connection hole 602. The first reinforcement member 710 may have a larger size than the connection hole 602. The first reinforcement member 710 may be provided in plurality. The first reinforcement member 710 may be provided to correspond to the connection hole 602 in one-to-one relationship. The first reinforcement member 710 may have a square plate shape. The first reinforcement member 710 and the sealing portion 630 may contain the same material. The first reinforcement member 710 and the sealing portion 630 may be formed integrally.

The sealing portion 630 may seal the injection hole 154 to prevent the cooling liquid CL from leaking through the injection hole 154. The first reinforcement member 710 may seal the connection hole 602 to prevent the cooling liquid CL from leaking through the connection hole 602.

The sealing portion 630 may receive a pressure P from the cooling liquid CL flowing in the cooling flow path 153. The first reinforcement member 710 may support the sealing portion 630. The first reinforcement member 710 may provide a support force S to the sealing portion 630. By supporting the sealing portion 630, the first reinforcement member 710 may prevent the sealing portion 630 from sagging or deforming due to the pressure P of the cooling liquid CL. Due to the first reinforcement member 710, the sealing portion 630 may stably seal the injection hole 154.

When a thermal event occurs, the sealing portion 630 may easily melt or be damaged. At this time, the first reinforcement member 710 may also melt or be damaged. Alternatively, if the sealing portion 630 melts or is damaged, the first reinforcement member 710 may fall downward. Due to the connection hole 602, the injection hole 154 may be opened more easily. Due to the connection hole 602, the first reinforcement member 710 may fall downward more easily. Due to the connection hole 602, the injection hole 154 and the input hole 211b may be communicated more easily. By melting or damaging the sealing portion 630, the connection hole 602, the injection hole 154, and the input hole 211b may be communicated. The cooling liquid CL may flow into the battery module 200 through the injection hole 154 and the input hole 211b. Therefore, the battery cell 220 in which a thermal event has occurred may be quickly cooled. Alternatively, the battery cell 220 in which a fire has occurred may be quickly extinguished.

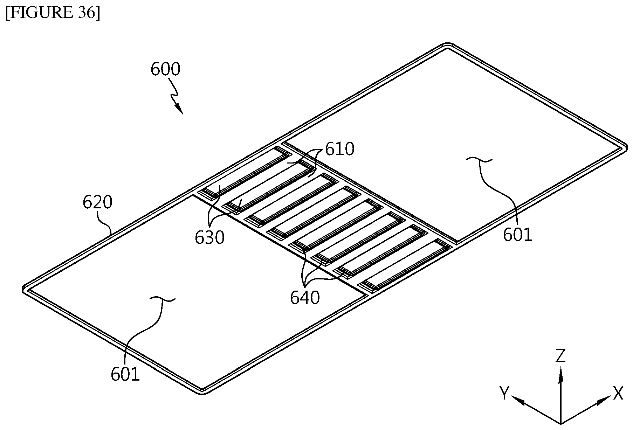

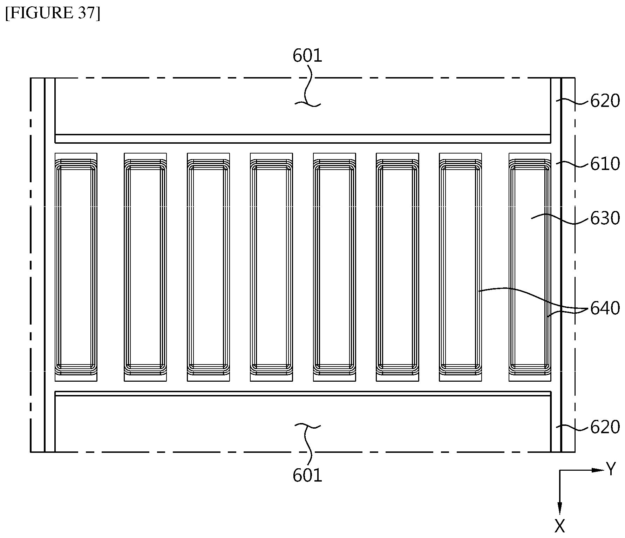

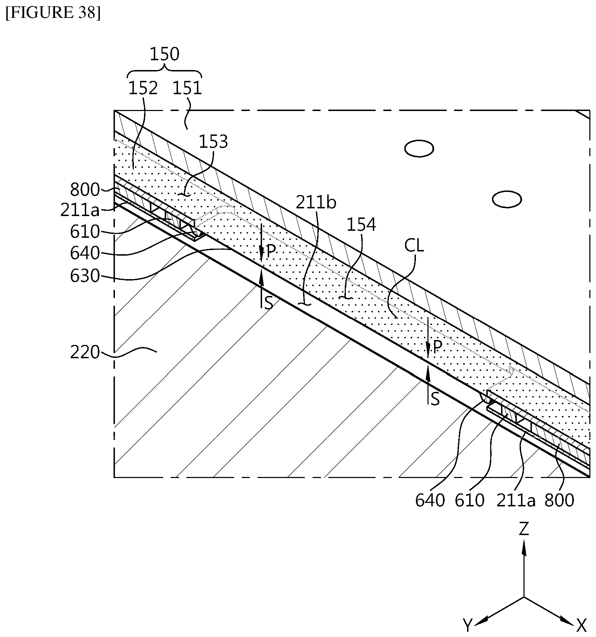

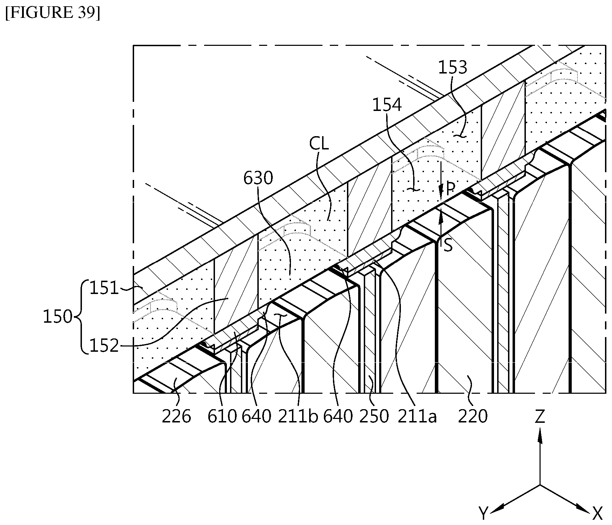

FIG. 36 is an exploded view showing a hole cover 600 according to still another embodiment of the present disclosure. FIG. 37 is a bottom view showing the hole cover 600 of FIG. 36. FIG. 38 is a cross-sectional view showing still another embodiment, taken along the line A-A' of FIG. 1. FIG. 39 is a cross-sectional view showing still another embodiment, taken along the line B-B' of FIG. 1.

Referring to FIGS. 36 to 39, the hole cover 600 may include a reinforcement portion 640. The reinforcement portion 640 may be formed on the lower surface of the sealing portion 630. The reinforcement portion 640 may protrude from the lower surface of the sealing portion 630. The reinforcement portion 640 and the sealing portion 630 may contain the same material. The reinforcement portion 640 may be formed integrally with the sealing portion 630. The reinforcement portion 640 may extend along the perimeter of the injection hole 154. The reinforcement portion 640 may have a square ring shape. The reinforcement portion 640 may extend along the perimeter of the input hole 211b. The thickness of the reinforcement portion 640 may smaller than the thickness of the sealing portion 630. The thickness of the reinforcement portion 640 may be smaller than the thickness of the first part 610.

The sealing portion 630 may seal the injection hole 154. The inside of the cooling flow path 153 may be filled with a cooling liquid CL. The sealing portion 630 may seal the injection hole 154 to prevent the cooling liquid CL from leaking through the injection hole 154.

The sealing portion 630 may receive a pressure P from the cooling liquid CL flowing in the cooling flow path 153. The reinforcement portion 640 may be arranged at a portion where the pressure P of the cooling liquid CL is concentrated. The reinforcement portion 640 may support the sealing portion 630. The reinforcement portion 640 may provide a support force S to the sealing portion 630. By supporting the sealing portion 630, the reinforcement portion 640 may prevent the sealing portion 630 from sagging or deforming due to the pressure P of the cooling liquid CL. Due to the reinforcement portion 640, the sealing portion 630 may stably seal the injection hole 154.

When a thermal event occurs, the sealing portion 630 may easily melt or be damaged. At this time, the reinforcement portion 640 may also melt or be damaged. By melting or being damaged, the injection hole 154 and the input hole 211b may be communicated. The cooling liquid CL may flow into the battery module 200 through the injection hole 154 and the input hole 211b. Therefore, the battery cell 220 in which a thermal event has occurred may be quickly cooled. Alternatively, the battery cell 220 in which a fire has occurred may be quickly extinguished.

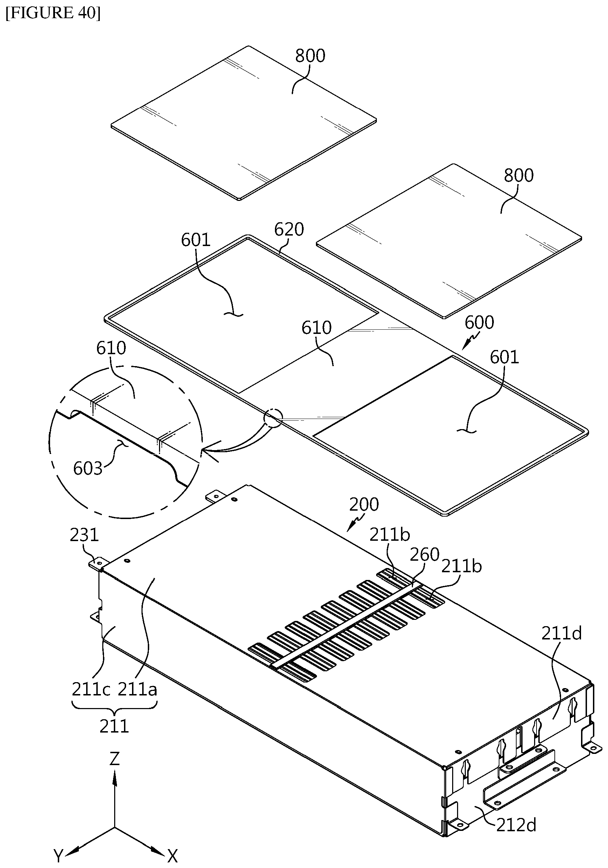

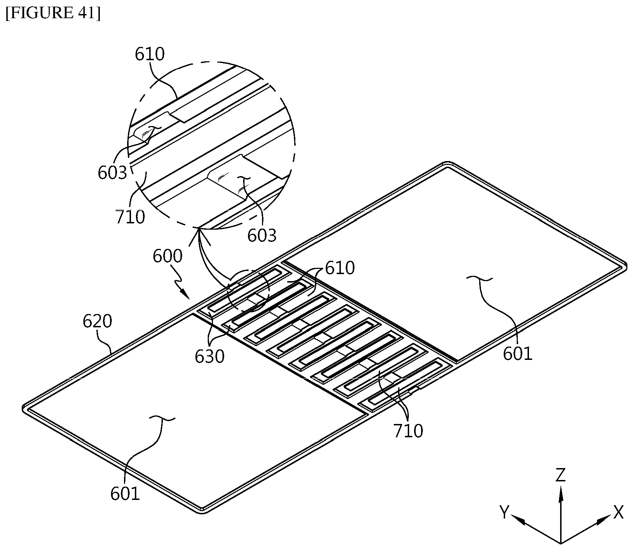

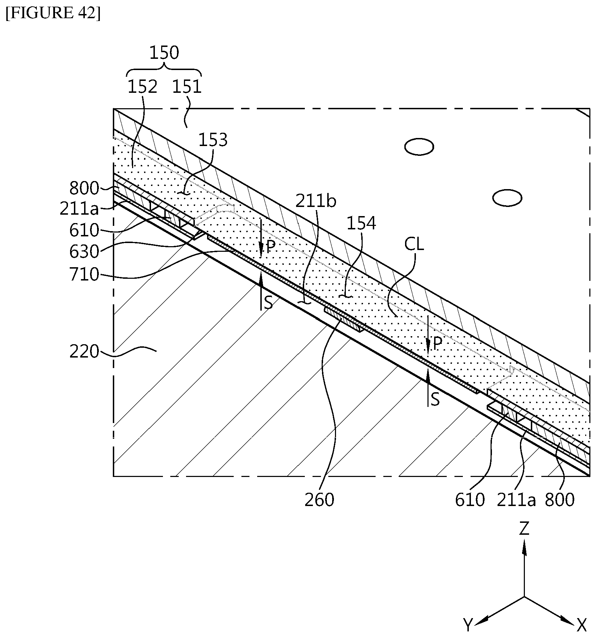

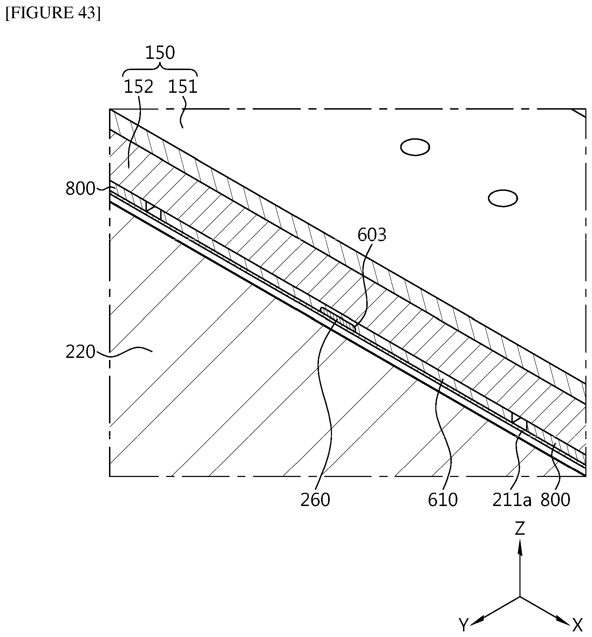

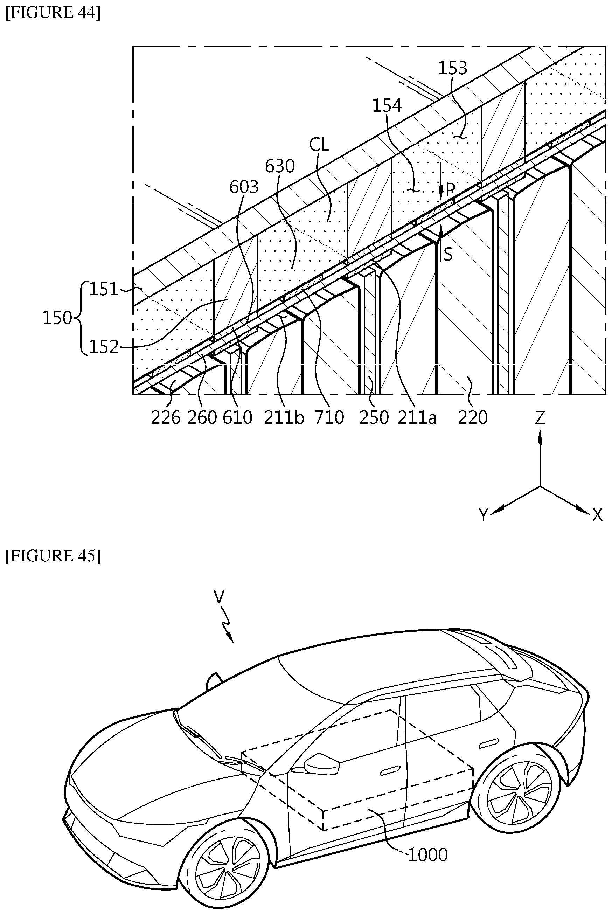

FIG. 40 is an exploded view showing some components of a battery pack 1000 according to still another embodiment of the present disclosure. FIG. 41 is a bottom perspective view showing the hole cover 600 and the first reinforcement member 710 of FIG. 40. FIG. 42 is a cross-sectional view showing still another embodiment, taken along the line A-A' of FIG. 1. FIG. 43 is a cross-sectional view showing still another embodiment, taken along the line C-C' of FIG. 1. FIG. 44 is a cross-sectional view showing still another embodiment, taken along the line B-B' of FIG. 1.

Referring to FIGS. 40 to 44, a support 260 may be provided on the upper surface of the top plate 211a. The support 260 may extend along the right and left direction or the Y-axis direction. The support 260 may partition the input hole 211b. The support 260 may partition a plurality of input holes 211b. The support 260 may be coupled, fastened, contacted, or attached to the upper surface of the top plate 211a. The support 260 may also be formed integrally with the top plate 211a.

The hole cover 600 may include an accommodation portion 603 in which the support 260 is accommodated. The accommodation portion 603 may be a groove 603. The accommodation portion 603 may extend along the right and left direction or the Y-axis direction. The accommodation portion 603 may be formed on the lower surface of the first part 610.

The first reinforcement member 710 may be coupled, attached, fastened, or fixed to the hole cover 600. The first reinforcement member 710 may be coupled, attached, fastened, or fixed to the lower surface of the sealing portion 630. The first reinforcement member 710 may be provided in plurality. The first reinforcement member 710 may be provided to correspond to the sealing portion 630 in one-to-one relationship. The first reinforcement member 710 may have a square plate shape. The first reinforcement member 710 and the sealing portion 630 may contain the same material. The first reinforcement member 710 and the sealing portion 630 may also be formed integrally.

The sealing portion 630 may seal the injection hole 154. The inside of the cooling flow path 153 may be filled with a cooling liquid CL. The sealing portion 630 may seal the injection hole 154 to prevent the cooling liquid CL from leaking through the injection hole 154.

The injection hole 154 may face the input hole 211b. The sealing portion 630 may be arranged between the injection hole 154 and the input hole 211b. The first reinforcement member 710 may be arranged on the lower surface of the sealing portion 630. The support 260 may be arranged below the first reinforcement member 710.

The hole cover 600 may be fixed between the top cover assembly 150 and the battery module 200. The hole cover 600 may be fixed between the lower plate 152 of the top cover assembly 150 and the top plate 211a.

The sealing portion 630 may receive a pressure P from the cooling liquid CL flowing in the cooling flow path 153. The first reinforcement member 710 may support the sealing portion 630. The first reinforcement member 710 may provide a support force S to the sealing portion 630. By supporting the sealing portion 630, the first reinforcement member 710 may prevent the sealing portion 630 from sagging or deforming due to the pressure P of the cooling liquid CL. Due to the first reinforcement member 710, the sealing portion 630 may stably seal the injection hole 154.

The support 260 may support the first reinforcement member 710. The support 260 may provide a support force to the first reinforcement member 710. By supporting the first reinforcement member 710, the support 260 may more strongly prevent the sealing portion 630 from sagging or deforming due to the pressure P of the cooling liquid CL. Due to the support 260 and the first reinforcement member 710, the sealing portion 630 may seal the injection hole 154 more stably.

When a thermal event occurs, the sealing portion 630 may easily melt or be damaged. At this time, the first reinforcement member 710 may also melt or be damaged. Alternatively, if the sealing portion 630 melts or is damaged, the first reinforcement member 710 may fall downward. By melting or damaging the sealing portion 630, the injection hole 154 and the input hole 211b may be communicated. The cooling liquid CL may flow into the battery module 200 through the injection hole 154 and the input hole 211b. As a result, the battery cell 220 in which the thermal event has occurred may be quickly cooled. Alternatively, the battery cell 220 in which a fire has occurred may be quickly extinguished.

FIG. 45 is a drawing showing a vehicle V according to an embodiment of the present disclosure.

Referring to FIG. 45, the battery pack 1000 according to the present disclosure may be applied to a vehicle V, such as an electric vehicle or a hybrid electric vehicle. That is, the vehicle V according to the present disclosure may include the battery pack 1000 according to the present disclosure. In addition, the vehicle V according to the present disclosure may further include various other components included in a vehicle, in addition to the battery pack 1000. For example, the vehicle V according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a bottom cover assembly;
a battery module installed on an upper surface of the bottom cover assembly;
a top cover assembly located above the battery module and having a flow path formed therein and an injection hole communicating with the flow path and facing the battery module; and
a hole cover fixed between the top cover assembly and the battery module and configured to seal the injection hole.

2. The battery pack according to claim 1,
wherein the hole cover is coupled to an upper surface of the battery module.

3. The battery pack according to claim 1,
wherein the hole cover is coupled to a lower surface of the top cover assembly.

4. The battery pack according to claim 1,
wherein the hole cover includes:
a sealing portion configured to face the injection hole; and
a first part extending from the sealing portion and configured to surround the sealing portion,
wherein the sealing portion has a smaller thickness than the first part.

5. The battery pack according to claim 4, further comprising:
a first reinforcement member disposed on a lower surface of the sealing portion.

6. The battery pack according to claim 5,
wherein the first reinforcement member has a plate shape.

7. The battery pack according to claim 5,
wherein the first reinforcement member has a mesh shape.

8. The battery pack according to claim 5,
wherein the hole cover is formed in the sealing portion and has a connection hole facing the injection hole, and
wherein the first reinforcement member seals the connection hole.

9. The battery pack according to claim 5,
wherein the sealing portion and the first reinforcement member are formed integrally.

10. The battery pack according to claim 4, further comprising:
a second reinforcement member disposed on an upper surface of the sealing portion.

11. The battery pack according to claim 10,
wherein the sealing portion and the second reinforcement member are formed integrally.

12. The battery pack according to claim 4,
wherein the hole cover further includes a reinforcement portion extending along a perimeter of the injection hole, and
wherein the reinforcement portion has a smaller thickness than the first part and a greater thickness than the sealing portion.

13. The battery pack according to claim 5,
wherein the battery module includes:
a module case providing a space therein and having a top plate; and
a battery cell located inside the module case,
wherein the top plate has an input hole facing the sealing portion.

14. The battery pack according to claim 13,
wherein the injection hole and the input hole are configured to communicate with each other when a thermal event occurs.

15. The battery pack according to claim 13,
wherein the battery module further includes a support formed on an upper surface of the top plate and configured to partition the input hole and support the first reinforcement member.

16. The battery pack according to claim 15,
wherein the support and the top plate are formed integrally.

17. The battery pack according to claim 15,
wherein the hole cover has a groove formed on a lower surface of the first part, and
wherein the support is accommodated in the groove.

18. The battery pack according to claim 1,
wherein the hole cover has an opening that exposes an upper surface of the battery module, and
wherein the battery pack further comprises a heat transfer member arranged in the opening and configured to contact a lower surface of the top cover assembly and the upper surface of the battery module.

19. The battery pack according to claim 18,
wherein the hole cover further includes a second part extending along a perimeter of the upper surface of the battery module.

20. A vehicle comprising the battery pack according to any one of claims 1 to 19.
